# EUROPÄISCHE PATENTSCHRIFT

(11) **EP 2 677 293 B1**
(45) Veröffentlichungstag und Bekanntmachung des Hinweises auf die Patenterteilung: **18.03.2020**
(21) Anmeldenummer: 12401124.8
(22) Anmeldetag: 20.06.2012
(51) Int. Cl.: G01M 17/007

(54) **Prüfsystem und Verfahren zum Prüfen eines Fahrzeuges**
Test system and method for testing a vehicle
Système de contrôle et procédé de contrôle d'un véhicule automobile

(43) Veröffentlichungstag der Anmeldung: 25.12.2013
(73) Patentinhaber: Mehnert, Jens, 08468 Heinsdorfergrund (DE)
(72) Erfinder: Mehnert, Jens, 08468 Heinsdorfergrund (DE)
(74) Vertreter: Steiniger, Carmen

(56) Entgegenhaltungen:
- EP-A1- 2 372 333
- GB-A- 2 245 980

## Beschreibung

Die vorliegende Erfindung betrifft ein Prüfsystem mit einem Prüfstand für ein Fahrzeug, welcher wenigstens eine Prüfrolle je Fahrzeugrad aufweist, wobei wenigstens einer der Prüfrollen ein Antriebsmotor zugeordnet ist, durch den die wenigstens eine Prüfrolle rotierbar und/oder abbremsbar ist; an dem Fahrzeug und dem Prüfstand Sensoren vorgesehen sind, mit welchen Sensorkennwerte des Fahrzeuges und des Prüfstandes erfassbar sind; und der Prüfstand eine Steuereinheit aufweist, an die die Sensorkennwerte übermittelbar sind. Die Erfindung betrifft ferner ein Verfahren zum Prüfen eines Fahrzeuges auf einem Prüfstand, wobei jedem Fahrzeugrad des Fahrzeuges wenigstens eine Prüfrolle des Prüfstandes zugeordnet wird, und sich das Fahrzeugrad auf der Prüfrolle dreht, wenigstens eine der Prüfrollen mittels eines Antriebsmotors rotiert und/oder abgebremst wird, und durch Sensoren des Fahrzeuges und des Prüfstandes Sensorkennwerte von Fahrzeug und Prüfstand erfasst und an eine Steuereinheit des Prüfstandes übermittelt werden.

Rollenprüfstände sind in der Fahrzeugentwicklung, Herstellung und Überwachung von großer Bedeutung. Insbesondere können mit Rollenprüfständen Grundfunktionen eines Kraftfahrzeuges, wie beispielsweise Motorleistung, Schaltpunkte, Unwuchtigkeiten, die Tachometerfunktion und dergleichen, am fertigen Kraftfahrzeug überprüft werden. Auch sicherheitsrelevante Funktionen, wie beispielsweise der Betriebs- und Haltebremse, können durch Rollenprüfstände getestet werden. In zunehmendem Maße finden Fahrerassistenzsysteme einen Einsatz in Fahrzeugen, um fahrdynamische Prozesse zu überwachen und bei Bedarf unterstützend in den Fahrbetrieb einzugreifen. Nicht zuletzt ist ein Anstieg von Fahrzeugen mit teilweisem oder vollständigem elektrischen Antrieb festzustellen. Hierbei wird zur Gewinnung maximaler Rekuperationsraten die Fahrzeugverzögerung möglichst vollständig durch elektrische Systeme betrieben.

Ein solcher Rollenprüfstand ist beispielsweise in der Druckschrift DE 10 2009 051 971 A1 beschrieben. Bei diesem Rollenprüfstand steht die Überprüfung der Funktionstüchtigkeit der Antriebsschlupfregelung im Vordergrund. Es wird dargestellt, dass die Prüfvorrichtung einen geteilten Untergrund zumindest für die angetriebenen Räder des Fahrzeuges umfasst. Dieser ist so gestaltet, dass sich ein Rad der angetriebenen Achse auf einem griffigen und das andere Rad auf einem nicht-griffigen Untergrund befinden. Im Ergebnis können verschiedene Zustände des Straßenbelages simuliert und das zugehörige Regelverhalten der Stellglieder ermittelt und ausgewertet werden. Die Nutzung dieses Prüfstandes ist auf die Beurteilung des Regelverhaltens für den Fahrzeugvortrieb limitiert.

Aus der Druckschrift DE 10 2010 009 096 A1 ist ein Prüfstand, insbesondere ein Rollenprüfstand, für ein Fahrzeug bekannt, der mindestens eine mittels eines Antriebes angetriebene Rolle, die ein an dieser anliegendes Fahrzeugrad antreibt, umfasst. Es ist eine Vorrichtung dargestellt, welche die Fahrzeugposition erfasst und auswertet und bei Abweichungen eine Trägervorrichtung einsetzt, welche das Fahrzeug aufhalten oder positionieren kann. Dadurch wird die Arbeitssicherheit für in unmittelbarer Prüfstandumgebung arbeitendes Personal verbessert.

In der Druckschrift DE 10 2010 034 850 A1 wird ein Prüfstand zum Simulieren von im Fahrbetrieb in ein Kraftfahrzeug oder in Teile eines Kraftfahrzeuges eingeleiteten Kräften und Momenten offenbart. Es wird das Ziel verfolgt, eine weitestgehend realistische Simulation von Straßenfahrten, insbesondere von intensiv schädigenden Strecken, zu gewährleisten, wobei gleichzeitig der Prüfstand so konstruiert sein soll, dass für die Aktuatoren des Prüfstandes auf fahrzeugindividuelle Anregungs- bzw. Ansteuersignale verzichtet werden kann. Für die Umsetzung wird ein Prüfstandkonzept vorgeschlagen, bei welchem von den an der Radaufstandsplatte angreifenden Aktuatoren der Kraftfluss über den Radaufstandspunkt in das Fahrzeugrad und von dort in das Fahrzeug eingeleitet wird, wodurch der reale Einleitungsmechanismus von Straße/Fahrzeugrad/Fahrzeug realisiert ist. Eine Einbindung fahrdynamischer Simulationseinrichtungen, repräsentiert durch sich drehende Fahrzeugräder, ist hier nicht vorgesehen.

Die Druckschrift DE 20 2010 010 039 U1 enthält einen Rollenprüfstand, welcher dazu dient, die Grundfunktionen eines Kraftfahrzeuges auf einfache Weise und bei einfachem Aufbau des Rollenprüfstandes überprüfen zu können. Durch die Drehung der Räder eines Kraftfahrzeuges werden die zugehörigen Prüfstandsrollen angetrieben. Mit Hilfe einer mechanischen Verbindung erfolgt auf dieser Grundlage der Antrieb der zweiten Achse der Prüfstandsrollen. Eine Einbindung fahrdynamischer Simulationseinrichtungen, repräsentiert durch Stellglieder, welche eine Auslenkung der Fahrzeugfront oder des Fahrzeughecks bewirken, ist hier nicht vorgesehen.

In der Druckschrift EP 1 394 527 B1 ist ein Verfahren zur Messung seitlicher Bewegung von Fahrzeugen beschrieben. Es wird ein Prüfstand offenbart, welcher Rollen für die Vorderräder und Rollen für die Hinterräder aufweist und damit die Fahrzeugräder in Drehung versetzt. Durch Beweglichmachen der Prüfstandsrollen in seitlicher Richtung erfolgt die Einleitung einer Gierbewegung in das Fahrzeug mit Berechnung der seitlichen Versatzgröße des Fahrzeuges abhängig von der berechneten Gierwinkelgeschwindigkeit. Eine detaillierte Beschreibung zum Prüfstandsaufbau erfolgt nicht. Die angegebenen Verfahrensanweisungen weisen auf einen sehr aufwändig gestalteten Prüfstandsaufbau hin.
Aus der Druckschrift EP 2 372 333 A1 ist ein gattungsgemäßer Prüfstand und ein Verfahren zum Überprüfen von Fahrdynamiksystemen und/oder deren Komponenten bekannt. Der Prüfstand weist jeweils beidseitig eines zu prüfenden Fahrzeuges vorgesehene Vorderachsendoppelrollensätze und Hinterachsendoppelrollensätze auf, auf welchen die Reifen des Fahrzeuges während des Prüfvorganges aufliegen. Um ein Schleudern eines Heckbereiches eines Kraftfahrzeuges simulieren zu können, sind die beiden Hinterachsendoppelrollensätze jeweils auf einer Schleudervorrichtung angeordnet, mittels welcher die Hinterachsendoppelrollensätze relativ zu den Vorderachsendoppelrollensätzen seitlich verschoben werden können. Hierzu sind die Schleudervorrichtungen auf jeweils vier oder mehr Stahlkugeln gelagert, mit Hilfe welcher die Schleudervorrichtungen jeweils über Stahlplatten rollen. Die Schleudervorrichtungen sind zudem mittels eines Koppelelementes miteinander verbunden. An dem Koppelelement ist ein Schwenkarm vorgesehen, der an dem Koppelelement arretierbar ist. Wird die Arretierung gelöst, kann das Koppelelement eine Pendelbewegung ausführen. Der Schwenkarm ist über sein zweites Ende fest an einem Punkt des Prüfstandes befestigt, sodass der Schwenkarm eine Drehbewegung um diesen Befestigungspunkt ausführen kann. Ferner ist der Schwenkarm in seiner Länge veränderbar, wodurch sichergestellt werden soll, dass die Hinterräder des zu prüfenden Fahrzeuges bei der Verschwenkbewegung exakt jeweils die Kreisbahn beschreiben können, die sich aus der konkreten Fahrzeuggeometrie notwendig macht. Der Schwenkarm wird durch einen Hydraulikzylinder angetrieben. Die auf den Schwenkarm aufgeprägte Kraft wird in Form einer Querbeschleunigung und Gierrate auf das zu prüfende Fahrzeug übertragen.
Bei dem in der Druckschrift EP 2 372 333 A1 beschriebenen Prüfstand ist es sehr schwierig, definierte Kurvenbahnen bei der Verschwenkung der Hinterräder des Fahrzeuges zu simulieren. Die offenbarte Schwenkbewegung des Prüfstandes ist richtungsgebunden und Schlinger- oder Schleuderbewegungen des Fahrzeuges sind nicht abbildbar. Es ist lediglich möglich, auf ca. 30 km/h begrenzte Sprungfunktionen auf die Hinterräder des zu prüfenden Fahrzeuges zu übertragen. Darüber hinaus sind bei dem bekannten Prüfstand die Aufstandsflächen der Reifen des zu prüfenden Fahrzeuges nicht veränderbar. Es ergibt sich somit immer ein gleicher Reibwert.

Aus der Druckschrift GB 2 245 980 A ist ein Radprüfstand bekannt, der im Bereich der Vorder- und der Hinterräder eines zu prüfenden Fahrzeuges ein quer zur Fahrzeuglängsausrichtung auf Schienen einer Schlitteneinheit verfahrbares Gehäuse aufweist. Auf der Bodenplatte des Gehäuses sind untere Führungsschienen vorgesehen, auf welchen untere Schlitten parallel zur Fahrzeuglängsrichtung gleitbar montiert sind. Auf den unteren Schlitten sind senkrecht zu den unteren Führungsschienen ausgerichtete obere Führungsschienen vorgesehen, auf weichen obere Schlitten gleitbar montiert sind. Von den oberen Schlitten kragen insgesamt vier Projektionen nach oben aus, die durch Bewegungen der Schlitten in unterschiedlichen Richtungen, aber immer parallel zu der Bodenplatte relativverschiebbar sind. Die Projektionen greifen jeweils in Vertiefungen ein, die in die Unterseite eines Rollentisches, auf dem Prüfrollen des Prüfstandes rotierbar montiert sind, eingebracht sind. Dadurch ist der Rollentisch in einem bestimmten Bereich in der Ebene rotierbar.
Es ist daher die Aufgabe der vorliegenden Erfindung, einen Prüfstand und ein Verfahren zum Prüfen eines Fahrzeuges auf einem solchen Prüfstand zu Verfügung zu stellen, mit welchen ein realitätsnaher Fahrbetrieb unter Berücksichtigung unterschiedlichster Fahrsituationen simulierbar ist und mit welchen die Funktion und das Ansprechverhalten von Fahrdynamiksystemen und/oder deren Komponenten zuverlässig überprüft werden können.
Diese Aufgabe wird zum einen durch ein Prüfsystem der oben genannten Gattung gelöst, bei welchem der Prüfstand einen X-Schlitten aufweist, für dessen Antrieb ein Antriebsmotor vorgesehen ist und der in einer quer zur Fahrzeuglängsachse verlaufenden X-Richtung hin und her verschiebbar ist, und auf dem X-Schlitten wenigstens ein mit dem X-Schlitten bewegbarer Y-Schlitten vorgesehen ist, der in einer parallel zur Fahrzeuglängsachse verlaufenden Y-Richtung hin und her verschiebbar ist und an dem eine senkrecht zur X-Richtung und zur Y-Richtung verlaufende, durch ein Drehlager ausgebildete Z-Achse montiert ist, an welcher eine um die Z-Achse drehbare Aufnahmeplatte vorgesehen ist, auf welcher wenigstens eine der Prüfrollen drehbar aufgenommen ist.

Erfindungsgemäß sind der X-Schlitten und der wenigstens eine Y-Schlitten in übereinander liegenden Ebenen überkreuz zueinander vorgesehen. Die Drehbarkeit der wenigstens einen drehbaren Aufnahmeplatte wird in einer oberhalb des wenigstens einen Y-Schlittens liegenden Ebene um die als Drehpunkt dienende Z-Achse realisiert. Die Prüfrollen werden dabei durch die jeweilige Aufnahmeplatte aufgenommen.

Mithilfe des X-Schlittens, des wenigstens einen Y-Schlittens und der wenigstens einen um die Z-Achse drehbaren Aufnahmeplatte für die Prüfrollen wird erfindungsgemäß ein offenes Führungssystem für die Prüfrollen zur Verfügung gestellt, welches eine weitgehend variable Bewegbarkeit der Prüfrollen in X-, Y- und Z-Richtung gewährleistet. Dies ermöglicht es, durch einfache Ansteuerung der jeweiligen Antriebsmotoren jede beliebige Fahrsituation nachzustellen. Insbesondere lassen sich durch die Schlittenkonstruktion besonders exakt Kurven- bzw. Kreisbahnen der Räder eines Fahrzeuges nachstellen und diese messtechnisch sauber erfassen.
Dabei ist das erfindungsgemäße Prüfsystem nicht nur für Kraftfahrzeuge mit vier Rädern, sondern beispielsweise auch für Motorräder oder auch für Lastkraftwagen mit mehr als zwei Achsen einsetzbar. So können bei dem Prüfstand zur Prüfung von Kraftfahrzeugen mit zwei Achsen und vier Rädern beidseitig des Fahrzeuges angeordnete Front- und Heckprüfrollen verwendet werden, während zur Prüfung eines Motorrades ein zweiter Rollensatz auf einer Seite weggelassen werden kann und zur Prüfung eines Lastkraftwagen weitere Rollensätze für die weiteren Achsen hinzugefügt werden können.
Da in dem erfindungsgemäßen Prüfsystem Bewegungsfunktionen des Fahrzeuges unter Verwendung elektrischer Antriebsmotoren nachgestellt werden, können beispielsweise Fahrsituationsänderungen abrupt simuliert werden. Die verwendeten Elektromotoren sind gut regelbar. Bei dem erfindungsgemäß zum Einsatz kommenden Prüfstand lassen sich nicht nur definierte Kurvenbahnen, sondern auch Schlinger- oder Schleuderbewegungen des Fahrzeuges ohne Weiteres nachstellen. So können beispielsweise mehrere Schleuderbewegungen nacheinander ausgeführt werden. Letzteres ist insbesondere mit dem in der Druckschrift EP 2 372 333 A1 verwendeten, nur schwer regelbaren Hydraulikantrieb für den Schwenkarm nicht möglich.
Gemäß einer vorteilhaften Ausführungsform der vorliegenden Erfindung ist der Antriebsmotor des X-Schlittens mit der Steuereinheit des Prüfstandes gekoppelt. Damit kann eine vorgegebene und am Prüfstand nachzustellende Bewegungsfunktion des Fahrzeuges durch die Steuereinheit in Steuersignale für den Antriebsmotor des X-Schlittens umgesetzt werden. Die Bewegung des Y-Schlittens und die Drehbewegung der Aufnahmeplatte um die Z-Achse erfolgt daraufhin zwangsgesteuert durch das Fahrzeug selbst, sodass mit dem erfindungsgemäß verwendeten Prüfstand unterschiedlichste Fahr- und Bewegungssituationen des Fahrzeuges nachstellbar sind. Darüber hinaus werden durch die Steuereinheit die Sensorkennwerte des Fahrzeuges durch die an dem Prüfstand vorgesehenen Sensoren erfasst, was es in Kombination mit der Initiierung der Bewegung des X-Schlittens durch die Steuereinheit ermöglicht, den Aktorkennwerten des Fahrzeuges und den Sensorkennwerten des Prüfstandes eine einheitliche zeitliche Basis zu unterlegen, sodass beide Arten von Kennwerten einander exakt zugeordnet werden können. Hierdurch lassen sich hochgradig zuverlässige Prüfwerte des Fahrzeuges für unterschiedlichste simulierte Fahrsituationen gewinnen. Das Fahrzeug und seine Funktion werden dadurch insgesamt verständlicher. Ferner können unterschiedlichste Einflussfaktoren auf die Betriebsweise des Fahrzeuges analysiert werden und diesen Einflussfaktoren durch eine geeignete Steuer- bzw. Regeltechnik gegengewirkt werden. Dies ermöglicht es, immer zuverlässigere und intelligentere Fahrzeuge zur Verfügung zu stellen. Beispielsweise kann an dem erfindungsgemäß verwendeten Prüfstand ein amplituden- oder frequenzmodulierter Schwingungseintrag in ein Fahrzeug simuliert werden.

Aus der Steuereinheit können daraufhin das Ansprechverhalten der einzelnen Systeme des Fahrzeuges und deren Regelcharakteristiken abgeleitet werden. Dies kann wiederum genutzt werden, um vorteilhaft die Motorlast zu steuern oder eine geeignete Drehzahlsteuerung der Reifen vorzunehmen. Außerdem können die gewonnenen Charakteristiken dazu benutzt werden, um Feder- oder Dämpfungskennungen am Fahrzeug zu verstellen. Grundsätzlich kann der erfindungsgemäß verwendete Prüfstand auch verwendet werden, um beispielsweise den Luftdruck der Reifen des Fahrzeuges zu simulieren.

Die Steuereinheit bildet damit in dem erfindungsgemäßen Prüfsystem einen zentralen Punkt, welcher ein Signal zur Drehbewegung des Antriebsmotors für den X-Schlitten ausgibt, die von den Sensoren des Prüfstandes gemessenen Sensorkennwerte erfasst und zeitlich synchron die Reaktionsparameter des Fahrzeuges aufnimmt. Dadurch kann beispielsweise zu einer bestimmten Zeit t₁ die Beschleunigung des Antriebsmotors des X-Schlittens a_{Motor}(t₁) mit der zugehörigen Beschleunigung des Fahrzeuges a_{Fahrzeug}(t₁) abgeglichen werden, da durch die Steuereinheit eine einheitliche zeitliche Basis geschaffen wird.

Die Bewegbarkeit des X-Schlittens und/oder des wenigstens einen Y-Schlittens ist besonders stabil, wenn der X-Schlitten und/oder der wenigstens eine Y-Schlitten auf jeweils zwei zueinander parallelen Linearführungen geführt werden. An den Linearführungen sind besonders geeignet Messeinrichtungen, wie beispielsweise Wegsensoren, vorsehbar, mit welchen die Linearbewegung des jeweiligen Schlittens überprüft werden kann.

Durch die erfindungsgemäß verwendete Prüfstandsanordnung ist es möglich, eine Vielzahl von Sensoren an dem Prüfstand vorzusehen. Beispielsweise ist es günstig, wenn an dem X-Schlitten und/oder wenigstens an einem der Y-Schlitten wenigstens ein Wegsensor vorgesehen ist. Durch den Wegsensor kann die Verfahrstrecke des X-Schlittens bzw. wenigstens eines der Y-Schlitten gemessen und an die Steuereinheit weitergegeben werden, sodass diese in der Lage ist, Abweichungen von der vorgegebenen Bewegungsfunktion unmittelbar zu erfassen und gegebenenfalls zu korrigieren.

Vorzugsweise ist an wenigstens einer Prüfrolle des Prüfstandes wenigstens ein Drehzahlsensor vorgesehen. Da an den Prüfrollen elektrische Antriebsmotoren vorgesehen sind, kann mittels des wenigstens einen Drehzahlsensors an der jeweiligen Prüfrolle sofort erkannt werden, ob die durch den Antriebsmotor an dieser Prüfrolle vorgegebene Geschwindigkeit oder der entsprechende Geschwindigkeitsverlauf tatsächlich vorliegt.

Gemäß einer bevorzugten Ausgestaltung des erfindungsgemäßen Prüfsystems ist an wenigstens einer der drehbaren Aufnahmeplatten ein Drehwinkelsensor vorgesehen. Der Drehwinkelsensor ist, wie auch die weiteren Sensoren des Prüfstandes, mit der Steuereinheit verbunden und schafft somit eine Möglichkeit, die aktuelle Drehbewegung der drehbaren Aufnahmeplatte um die Z-Achse direkt an die Steuereinheit zu übermitteln. Die Steuereinheit kann hierdurch die umgesetzte Bewegungsfunktion nachvollziehen und überprüfen und gegebenenfalls durch eine Änderung der Steuersignale beispielsweise an den Antriebsmotor des X-Schlittens korrigieren.

Es hat sich als ganz besonders vorteilhaft erwiesen, wenn wenigstens eine der Prüfrollen eine in ihrer Längsausdehnung geteilte Rolle ist, wobei wenigstens ein bewegliches Rollenteil dieser Prüfrolle in der X-Richtung verschiebbar ist. Bei der geteilten Prüfrolle kann ein Rollenteil fest und der andere beweglich gestaltbar sein. Es ist jedoch auch möglich, dass beide Rollenteile beweglich sind. Auf diese Weise ist es möglich, die Aufstandsfläche des der jeweiligen Prüfrolle zugeordneten Reifens des Fahrzeuges zu variieren. Die Verschiebbarkeit der einzelnen Rollenteile zueinander kann beispielsweise mittels eines an der jeweiligen Prüfrolle vorgesehenen Druckluftanschlusses erfolgen. Die Verschiebbarkeit der Rollenteile einer Prüfrolle zueinander wird beispielsweise durch ein Keilwellenprofil gewährleistet, wobei der Kraftfluss zwischen den verschobenen Rollenteilen durch einen Formschluss zur Nabe (Welle-Nabe-Verbindung) sichergestellt wird.

Dabei ist es besonders günstig, wenn an wenigstens einem beweglichen Rollenteil der geteilten Prüfrolle ein Wegsensor vorgesehen ist. Durch den Wegsensor kann der Abstand der beiden Rollenteile voneinander erfasst werden, woraus sich ein direkter Rückschluss auf die Aufstandsfläche des der Prüfrolle zugeordneten Reifens des Fahrzeuges ergibt.

In einer vorteilhaften Weiterbildung des erfindungsgemäßen Prüfsystems ist an wenigstens einer der Prüfrollen eine Kühleinrichtung vorgesehen. Hierdurch kann der der jeweiligen Prüfrolle zugeordnete Reifen während der Fahrzeugprüfung, bei welcher der Reifen infolge der durch Reibung mit der Prüfrolle entstehenden Wärme hohen Belastungen ausgesetzt ist, gekühlt werden, sodass der Reifen geschont wird und eine höhere Lebensdauer erhält. Ferner bewirkt die Kühlung eine bessere Wechselwirkung zwischen Prüfrolle und Reifen.

In einer geeigneten Ausführungsform des erfindungsgemäßen Prüfsystems ist an einer Außenseite wenigstens einer der Prüfrollen eine Kühldüsenvorrichtung mit einer Drehdurchführung für die wenigstens eine Prüfrolle vorgesehen. Mittels der Kühldüsenvorrichtung kann beispielsweise kühle Druckluft oder eine Kühlflüssigkeit auf die jeweilige Prüfrolle und/oder den auf der Prüfrolle aufstehenden Reifen des Fahrzeuges gestrahlt werden, während die Drehdurchführung ein ungehindertes Drehen der Prüfrolle erlaubt.

In einem günstigen Ausführungsbeispiel der vorliegenden Erfindung ist die Kühldüsenvorrichtung über eine Druckluftleitung mit einem Druckluftanschluss verbunden und eine Steuereinrichtung zur Druckluftverteilung vorgesehen. Hierdurch kann die Intensität der auf die Prüfrolle abgegebenen Druckluft gezielt an die jeweilige nachzustellende Fahrsituation angepasst werden. Mit dieser Anordnung ist eine Einhaltung der vorgegebenen Betriebstemperatur der Reifen des zu prüfenden Fahrzeuges möglich. So kann hiermit beispielswese eine Reifenbetriebstemperatur von etwa 70 °C eingestellt werden.

In einer anderen, ebenfalls bevorzugten Ausgestaltung des erfindungsgemäßen Prüfsystems ist zwischen einer Hubschwelle und einer Radaufhängung des Fahrzeuges wenigstens ein Druckzylinder vorgesehen, der mit einer Hydraulikdruck- oder einer Druckluftleitung und mit der Steuereinheit des Prüfstandes verbunden ist. Der Druckzylinder kann sich an der Hubschwelle abstützen, wobei durch den Hydraulikdruck oder die Druckluft die Radaufhängung des Fahrzeuges nach oben gedrückt wird. Auf diese Weise kann das zu prüfende Fahrzeugrad nach oben angehoben und die darunter befindliche Prüfrolle entlastet werden. Damit können beispielsweise Bodenwellen oder andere Anregungen seitens der Fahrbahn im Prüfbetrieb simuliert werden.

In einer weiteren Variante des erfindungsgemäßen Prüfsystems ist in einer Mantelfläche wenigstens einer der Prüfrollen wenigstens eine Auslassöffnung für ein Fluid und/oder Druckluft vorgesehen. Beispielsweise können in der Mantelfläche der jeweiligen Prüfrolle Bohrungen vorgesehen sein, durch welche Wasser oder Druckluft gegen den auf der Prüfrolle befindlichen Reifen aufgebracht werden kann. Hierdurch kann beispielsweise Aquaplaning simuliert werden. Das austretende Fluid und/oder die Druckluft kann auch zur Kühlung des Bereiches zwischen Prüfrolle und Reifen eingesetzt werden.

In einer anderen Ausbildung des erfindungsgemäßen Prüfsystems ist seitlich an wenigstens einer der Prüfrollen eine Strahlvorrichtung vorgesehen, aus welcher ein Fluid, Druckluft und/oder ein gefrorenes Fluid, wie beispielsweise Schnee, zwischen die Prüfrolle und einen auf der Prüfrolle vorgesehenen Reifen des Fahrzeuges strahlbar ist. Wenn beispielsweise pro Reifen zwei einander gegenüber liegende Prüfrollen zum Einsatz kommen, kann die Strahlvorrichtung so angeordnet werden, dass sie in den Bereich zwischen den beiden Prüfrollen abstrahlt.

Vorzugsweise ist der Austritt des Fluids, der Druckluft und/oder des gefrorenen Fluids mittels wenigstens eines Ventils einstellbar, welches mit der Steuereinheit des Prüfstandes gekoppelt ist. Auf diese Weise kann durch die Steuereinheit die Öffnung des Ventils derart eingestellt werden, dass eine einstellbare Benetzung des Bereiches zwischen Prüfrolle und Reifen und/oder eine optimale Kühlung dieses Bereiches gewährleistet ist.

In einer günstigen Ausgestaltung des erfindungsgemäßen Prüfsystems ist der X-Schlitten und/oder wenigstens einer der Y-Schlitten aus einer Schweißkonstruktion mit wenigstens einem Steg aus Metallschaum ausgebildet. Damit kann die Schlittenkonstruktion mit einem geringen Gewicht, das heißt als Leichtbaukonstruktion, ausgebildet werden.

Sinnvoll ist es auch, wenn das Prüfsystem wenigstens ein Infrarotsensor zum Erfassen der Temperatur an wenigstens einem Fahrzeugreifen aufweist, wobei der wenigstens eine Infrarotsensor mit der Steuereinheit gekoppelt ist. Mit dieser Anordnung kann unmittelbar während der Prüfung des Fahrzeuges die Reifentemperatur erfasst werden, wobei kontrolliert werden kann, dass die Reifentemperatur eine Maximaltemperatur nicht übersteigt.

Die Aufgabe wird darüber hinaus durch ein Verfahren der oben genannten Gattung gelöst, bei welchem eine Fahrzeugbewegung simuliert wird, indem ein X-Schlitten des Prüfstandes von einem Antriebmotor angetrieben wird und dadurch in einer quer zur Fahrzeuglängsachse verlaufenden X-Richtung verschoben wird, und auf dem X-Schlitten wenigstens ein Y-Schlitten vorgesehen ist, der sich mit dem X-Schlitten mit bewegt und der in einer parallel zur Fahrzeuglängsachse verlaufenden Y-Richtung verschoben wird und an dem eine senkrecht zur X-Richtung und zur Y-Richtung verlaufende, durch ein Drehlager ausgebildete Z-Achse montiert ist, um weiche eine Aufnahmeplatte für wenigstens eine der Prüfrollen gedreht wird.

Bei dem erfindungsgemäßen Verfahren wird der X-Schlitten des Prüfstandes von einem elektrischen Antriebsmotor angetrieben. Die Bewegung in Y-Richtung und die Drehbewegung der Aufnahmeplatte um die Z-Achse erfolgt automatisch durch die Bewegung der Räder des Fahrzeuges, welche über die angetriebenen Prüfrollen in Drehbewegung versetzt werden. Durch den elektromotorischen Antrieb des X-Schlittens kann die Bewegung des X-Schlittens ohne Weiteres in Form von wenigstens einer Sprungfunktion, Schlingerbewegungen, ständig wechselnden Hin- und Herbewegungen und vielem mehr erfolgen, was bei einem hydraulischen Antrieb, der beispielsweise für den Schwenkarm in der Druckschrift EP 2 372 333 A1 vorgesehen ist, nicht möglich ist. So können erfindungsgemäß unterschiedlichste Fahrsituationen schnell und einfach nachgestellt werden. Außerdem können bei dem erfindungsgemäßen Verfahren eine Vielzahl von Sensoren an unterschiedlichsten Stellen des Prüfstandes positioniert werden, die infolge der Vielfalt möglicher Prüfsituationen eine große Anzahl an Sensorkennwerten des Fahrzeuges erfassen können, welche unmittelbar durch die Steuereinheit des Prüfstandes verwertet werden können.

In einer besonders vorteilhaften Ausführungsform des erfindungsgemäßen Verfahrens übermittelt die Steuereinheit einer Fahrsituation entsprechende Ansteuersignale an die Antriebsmotoren des Prüfstandes, empfängt Sensorkennwerte des Fahrzeuges und des Prüfstandes von an dem Fahrzeug und an dem Prüfstand vorgesehenen Sensoren und führt einen Abgleich der Sensorkennwerte des Fahrzeuges und des Prüfstandes durch, wobei den Sensorkennwerten des Fahrzeuges und des Prüfstandes eine einheitliche zeitliche Basis zugeordnet wird.

Das heißt, in die Steuereinheit werden Aktionsdaten des Prüfstandes für verschiedene Fahrsituationen eingegeben und die Steuereinheit aktiviert daraufhin entsprechend die Antriebsmotoren des Prüfstandes, welche die vorgegebene Fahrsituation mittels des Prüfstandes simulieren. Das Fahrzeug reagiert auf die durch den Prüfstand vorgegebenen Störsignale mit bestimmten Reaktionen. Diese Reaktionen werden durch die am Fahrzeug vorgesehenen Sensoren registriert. Parallel dazu werden durch die am Prüfstand vorgesehenen Sensoren die Prüfstandssensorkennwerte erfasst. Dabei wird sowohl der zeitlich Verlauf als auch die Intensität der Sensorkennwerte von Fahrzeug und Prüfstand erfasst. Die von den Sensoren am Fahrzeug gewonnenen Fahrzeugsensorkennwerte (Aktorkennwerte) und deren Verläufe sowie die Prüfstandssensorkennwerte und deren Verläufe werden an die Steuereinheit übermittelt, welche die Aktorkennwerte des Fahrzeuges mit den Sensorkennwerten der Prüfstandssensoren synchronisiert, sodass eine Auswertung der gewonnenen Sensorkennwerte auf Basis eines einheitlichen Zeitstempels erfolgen kann. Dadurch kann ermittelt werden, wann und wie das Fahrzeug auf bestimmte Anregungen antwortet, das heißt, wann und wie die entsprechenden Funktionen des Fahrzeuges in Reaktion auf bestimmte Anregungen geregelt bzw. nachgeregelt werden.

Die Sensorkennwerte des Fahrzeuges können folgende Daten umfassen: die Motordrehzahl des Motors des Fahrzeuges, die Motorlast, den jeweiligen Gang, den Reifenluftdruck wenigstens eines Reifens, die Raddrehzahl wenigstens eines Rades des Fahrzeuges, die Fahrpedalstellung, die Federdämpferkennung je Fahrzeugachse, die Gierrate des Fahrzeuges, den Bremsdruck, den Federweg der Radfeder eines oder mehrerer Fahrzeugräder, den Hydraulikdruck der Stoßdämpfer des Fahrzeuges, den Kraftstoffverbrauch des Fahrzeuges, den Luftmassendurchsatz des Fahrzeuges, den Ausstoß des Fahrzeuges an Kohlenmonoxid, Kohlendioxid und/oder Stickoxiden und/oder die Partikelemission des Fahrzeuges. Dabei können einzelne oder auch alle der genannten Sensorkennwerte erfasst oder auch eingegeben werden. Ferner können auch weitere, hier nicht genannte Sensorkennwerte des Fahrzeuges erfindungsgemäß zum Einsatz kommen.

Mit dem erfindungsgemäßen Verfahren hat man die Möglichkeit, verschiedene aktive Sicherheitseinrichtungen des Fahrzeuges zu prüfen. Insbesondere ist es hiermit möglich, der Steuereinheit reflektierte Signale von Fahrassistenzsystemen des Fahrzeuges zu übermitteln, welche somit geeignet überprüft werden können. Solche Fahrassistenzsysteme sind zum Beispiel ein Auf- und Abblendautomat, eine Distanzanzeige, eine Bremsassistenzvorrichtung oder eine Spurenkennung des zu prüfenden Fahrzeuges.

In einem bevorzugten Ausführungsbeispiel des erfindungsgemäßen Verfahrens umfasst die Bewegungsfunktion wenigstens eine Sprungfunktion, die dem Antriebsmotor des X-Schlittens durch die Steuereinheit vorgegeben wird, wobei dem oder den Antriebsmotor(en) wenigstens einer der Prüfrollen wenigstens eine Drehzahl und wenigstens ein Drehmoment durch die Steuereinheit vorgegeben werden. Dabei werden die Regelsignale des Fahrzeuges über die Prüfstandsensorik aufgenommen und die zugehörigen Fahrzeugsystemdaten erfasst.

Mit dem erfindungsgemäßen Verfahren sind selbstverständlich nicht nur Sprungfunktionen, sondern auch jegliche andere Bewegungsfunktionen simulierbar. Insbesondere können auch kontinuierliche Anregungen vorgenommen werden. Ferner ist es möglich, einer Schleuderbewegung eine beispielsweise mittels eines Druckzylinders initiierte Hubbewegung zu überlagern und/oder während einer Bewegung Reibwertunterschiede zwischen Rad und Prüfrolle darzustellen.

In einer ebenfalls günstigen Ausgestaltung des erfindungsgemäßen Verfahrens ist wenigstens eine der Prüfrollen eine in ihrer Längsausrichtung geteilte Rolle, wobei wenigstens ein bewegliches Rollenteil dieser Prüfrolle in der X-Richtung verschoben wird. Durch Verschieben des beweglichen Rollenteils kann die resultierende Radaufstandsfläche verändert werden und dabei können dynamische Fahrzustände durch Vorgabe des Drehmomentes, der Drehzahl, der Achslast und/oder einer Gierbewegung simuliert werden.

In einer geeigneten Weiterbildung des erfindungsgemäßen Verfahrens wird zwischen wenigstens einer der Prüfrollen und einen dieser Prüfrolle zugeordneten Reifen des Fahrzeuges wenigstens ein Fluid, Druckluft und/oder ein gefrorenes Fluid, wie beispielsweise Schnee, eingebracht. Mit dieser Verfahrensweise kann der Reibwert zwischen Prüfrolle und Rad durch Einleitung von beispielsweise Wasser und/oder Schnee verändert werden, wobei dynamische Fahrzustände durch Variation des Drehmomentes, der Drehzahl, der Achslast und/oder einer Gierbewegung simuliert werden können. Beispielsweise kann hierdurch Aquaplaning nachgestellt werden.

Es kann außerdem von Vorteil sein, wenn an wenigstens einer der Prüfrollen die Temperatur durch Infrarotmessung gemessen und an die Steuereinheit übermittelt wird. Die Steuereinheit ist dann, vorzugsweise in Kombination mit einer der vorgenannten Ausführungsformen des erfindungsgemäßen Prüfstandes, in der Lage, die Temperatur, insbesondere der Reifen, zu regulieren.

In einer anderen Variante des erfindungsgemäßen Verfahrens wird zwischen wenigstens einer der Prüfrollen und einen dieser Prüfrolle zugeordneten Reifen des Fahrzeuges wenigstens ein Gegenstand, wie beispielsweise ein Kunststoffkörper, eingebracht. Durch Zufuhr eines solchen Gegenstandes kann beispielsweise der Reibwert zwischen Prüfrolle und Rad verändert werden, wobei dynamische Fahrzustände durch Vorgabe eines Drehmomentes, einer Drehzahl, einer Achslast und/oder einer Gierbewegung simuliert werden können. So können beispielsweise durch Zufuhr von Kunststoffkörpern zwischen Prüfrolle und Rad unterschiedliche Fahrbahnbeläge simuliert werden.

In einer Weiterbildung des erfindungsgemäßen Verfahrens wird mittels wenigstens eines zwischen einer Hubschwelle und einer Radaufhängung des Fahrzeuges wechselbar montierten Druckzylinders wenigstens ein Fahrzeugrad des Fahrzeuges entlastet. Durch den sich auf der Hubschwelle bzw. einem Achslenker abstützenden Druckzylinder wird das entsprechende Rad des Fahrzeuges nach oben angehoben. Auf diese Weise können beispielsweise Fahrbahnunebenheiten nachgestellt werden.

In einer weiteren Ausbildung des erfindungsgemäßen Verfahrens wird ein Lenkeinschlag des Fahrzeuges an die Steuereinheit übertragen, woraufhin die Steuereinheit den Antriebsmotor des X-Schlittens ansteuert, um durch Auslenkung des Fahrzeughecks die gewünschte Lenkbewegung der Vorderräder des Fahrzeuges umzusetzen. Auf diese Weise erfolgt eine unmittelbare Interaktion zwischen Fahrzeug und Prüfstand, bei welcher die Lenkung des Fahrzeuges überprüft werden kann.

Bevorzugte Ausführungsformen der vorliegende Erfindung, deren Aufbau, Funktion und Vorteile, werden im Folgenden anhand von Figuren näher erläutert, wobei
- Figur 1: schematisch eine mögliche Ausgestaltung eines erfindungsgemäß verwendeten Prüfstandes in einer Draufsicht zeigt;
- Figur 2: schematisch den Prüfstand aus Figur 1 mit weiteren Details zeigt; und
- Figur 3: schematisch eine mögliche Ausführungsform eines erfindungsgemäß verwendeten Prüfstandes mit Blick auf einen zwischen einer Hubschwelle und einer Radaufhängung befindlichen Druckzylinder zeigt.

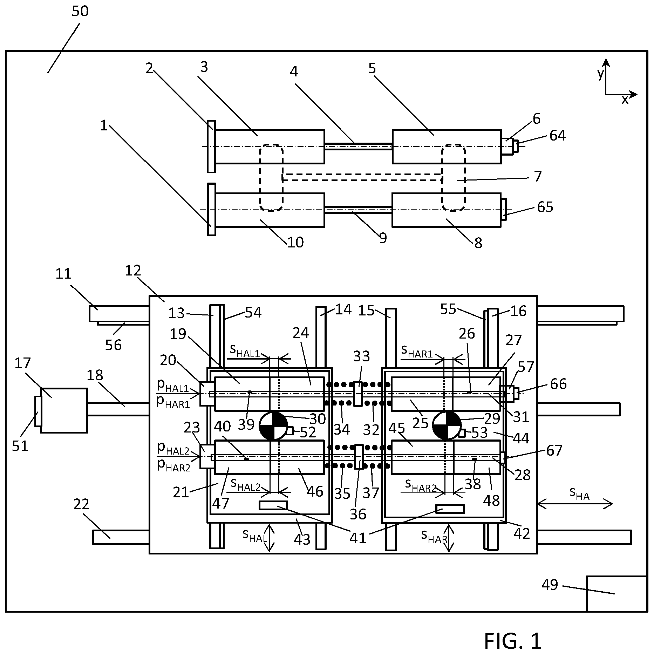

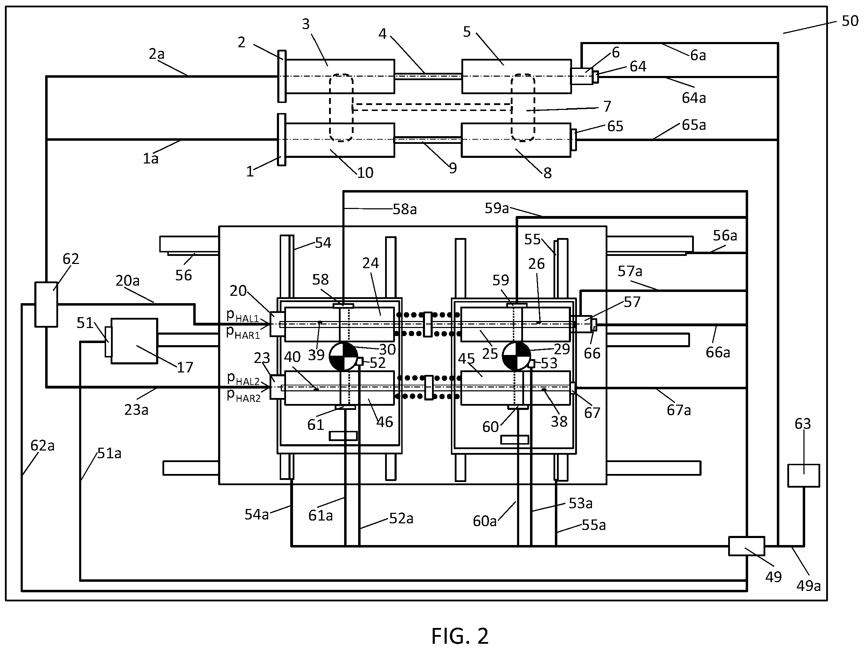

Die Figuren 1 und 2 zeigen schematisch jeweils in einer Draufsicht eine Ausführungsform eines erfindungsgemäß verwendeten Prüfstandes 50. Wie es durch die Pfeile rechts oben in Figur 1 schematisch dargestellt ist, wird im Folgenden die X-Richtung als in Figur 1 und 2 von links nach rechts verlaufend und die Y-Richtung in Figur 1 und 2 von unten nach oben verlaufend beschrieben. Die im Folgenden ebenfalls erwähnte Z-Achse ist senkrecht zu der X-Richtung und zu der Y-Richtung, das heißt jeweils aus der Bildebene heraus nach oben ausgerichtet.

In den Figuren 1 und 2 ist jeweils oben die Prüfrollenanordnung für eine Vorderachse eines Fahrzeuges und unten die Prüfrollenanordnung für eine Hinterachse eines Fahrzeuges dargestellt. Die Prüfrollenanordnung für die Vorderachse des Fahrzeuges umfasst sowohl auf der linken als auch auf der rechten Fahrzeugeseite eine Doppelprüfrollenanordnung. Die Doppelprüfrollenanordnung für die linke Fahrzeugvorderachse umfasst eine erste Prüfrolle vorn links 3 und eine zweite Prüfrolle vorn links 10. Die Doppelprüfrollenanordnung auf der rechten Vorderachsenseite umfasst eine erste Prüfrolle vorn rechts 5 und eine zweite Prüfrolle vorn rechts 8. Die erste Prüfrolle vorn links 3 ist mit der ersten Prüfrolle vorn rechts 5 mittels einer Achswelle 4 gekoppelt. Die zweite Prüfrolle vorn links 10 und die zweite Prüfrolle vorn rechts 8 sind ebenfalls durch eine Achswelle 9 miteinander gekoppelt. Die Achswellen 4, 9 können in anderen, nicht gezeigten Ausführungsformen der vorliegenden Erfindung entfallen, wenn an jeder Fahrzeugseite für wenigstens eine der Prüfrollen ein separater Antriebsmotor vorgesehen ist.

Wie es durch die Strichlinien in der oberen Hälfte von Figur 1 schematisch dargestellt ist, befindet sich eine Fahrzeugvorderachse 7 mit Rädern auf den Frontprüfrollen 3, 10, 5, 8, wobei jeweils ein Rad des Fahrzeuges auf zwei Prüfrollen 3, 10 bzw. 5, 8 aufsteht.

In dem Ausführungsbeispiel von Figur 1 ist sowohl an der ersten Prüfrolle vorn links 3 als auch an der zweiten Prüfrolle vorn links 10 an der Außenseite der jeweiligen Prüfrolle 3, 10 eine Kühldüsenvorrichtung 1, 2 vorgesehen. In dem konkreten Ausführungsbeispiel besteht die Kühldüsenvorrichtung 1, 2 jeweils aus einer Kühldüsenplatte, die, wie es in Figur 2 detaillierter gezeigt ist, jeweils mit einer Druckluftleitung 1a bzw. 2a gekoppelt sind. Die Druckluftleitungen 1a, 2a sind, wie es ebenfalls aus Figur 2 hervorgeht, mit einer Steuereinrichtung 62 zur Druckluftverteilung und natürlich auch mit einem entsprechenden Druckluftanschluss gekoppelt.

In den Druckluftleitungen 1a bzw. 2a sind vorzugsweise Ventile vorgesehen, mit welchen die Druckluftzufuhr zu den Kühldüsenvorrichtungen 1, 2 geeignet eingestellt werden kann. Diese Ventile können dann durch die Steuereinheit 62 geeignet angesteuert werden.

Im Hinblick auf Figur 1 ist sowohl an der ersten Prüfrolle vorn rechts 5 als auch an der zweiten Prüfrolle vorn rechts 8 jeweils ein Messsystem 64 bzw. 65 für die vorderen bzw. hinteren Frontprüfrollen vorgesehen. Das Messsystem 64, 65 kann beispielsweise jeweils einen Drehzahlsensor umfassen. Wie es an der ersten Prüfrolle vorn rechts 5 gezeigt ist, befindet sich das Messsystem 64 für die vorderen Frontprüfrollen direkt an einem Antriebsmotor 6 für die Frontprüfrollen. Mithilfe des Antriebsmotors 6 werden die miteinander gekoppelten Frontprüfrollen 3 und 5 angetrieben. Die hinteren Frontprüfrollen 8 und 10 weisen keinen separaten Antrieb auf und werden durch die Kopplung mittels der auf den Prüfrollen 3, 5, 10, 8 aufstehenden Räder des Fahrzeuges beim Drehen der Frontprüfrollen 3, 5 mit bewegt.

In der Ausführungsform des Prüfstandes 50 von Figur 1 sind im unteren Teil der Darstellung Heckprüfrollenpaare für die linke und die rechte Fahrzeugheckseite vorgesehen. Die verwendeten Heckprüfrollen sind in ihrer Längsausdehnung geteilte Rollen, die sich jeweils aus einer unbeweglichen Teilrolle 19, 47, 27, 48 und einer gegenüber dieser unbeweglichen Teilrolle verschiebbaren beweglichen Teilrolle 24, 46, 25, 45 zusammensetzen. Die einander gegenüber liegenden Heckprüfrollen 19, 24 bzw. 25, 27 und 47, 46 bzw. 45, 48 sind jeweils auf Achswellen 31, 28 gelagert und durch diese Achswellen 31, 28 miteinander drehbar verbunden. Die Bewegbarkeit der Teilrollen 24, 25 bzw. 46, 45 ist in den Figuren 1 und 2 schematisch anhand der in einer Ausgangsposition durchgezogenen Linie zwischen den Teilrollen und anhand der gestrichelten Linie zwischen den Teilrollen dargestellt, wobei der Abstand zwischen diesen beiden Positionen der Teilrollen zueinander mit S_{HAL1} bzw. S_{HAR1} bzw. S_{HAL2} bzw. S_{HAR2} bezeichnet ist. In X-Richtung finden sich zwischen den gegenüber liegenden Heckprüfrollen 24, 25 bzw. 46, 45 Druckfedern 34, 32, 35, 37, die sich an Gegenlagern 33, 36 abstützen, die etwa mittig auf den Achswellen 31, 28 vorgesehen sind.

An den Prüfrollen sind, wie es in Figur 2 dargestellt ist, Messsysteme 58, 59, 61, 60 vorgesehen, welche beispielsweise Wegsensoren zum Erfassen der Verschiebung der geteilten Prüfrollen gegeneinander aufweisen können. Die Messsysteme 58, 59, 61, 60 sind jeweils über Datenleitungen 58a, 59a, 61a, 60a mit der Steuereinheit 49 des Prüfstandes 50 verbunden. Somit können die Messsysteme 58, 59, 61, 60 beispielsweise erfassten Wegstrecken direkt an die Steuereinheit 49 übermittelt werden.

Die vorderen Heckprüfrollen 19, 24; 25, 27 sind durch einen Antriebsmotor 57 antreibbar. Die hinteren Heckprüfrollen 47, 46; 45, 48 werden im Prüfbetrieb durch das Aufstehen von Rädern auf den Prüfrollenpaaren mit gedreht. Zum Erfassen der Drehbewegungen der Heckprüfrollen sind an den vorderen Heckprüfrollen 19, 24; 25, 27 als auch an den hinteren Heckprüfrollen 47, 46; 45, 48 jeweils seitlich Messsysteme 66, 67 vorgesehen. Die Messsysteme 66, 67 können beispielsweise Drehzahlsensoren umfassen, mit welchen die Drehzahlen der vorderen Heckprüfrollen einerseits und der hinteren Heckprüfrollen andererseits erfasst werden können. Die Messsysteme 66, 67 sind, wie es in Figur 2 dargestellt ist, über Datenleitungen 66a, 67a mit der Steuereinheit 49 des Prüfstandes 50 verbunden. So können die durch die Messsysteme 66, 67 gewonnenen Drehzahlwerte direkt an die Steuereinheit 49 übermittelt werden. Außerdem ist der Antriebsmotor 57 für die Heckprüfrollen mittels einer Datenleitung 57a mit der Steuereinheit 49 verbunden. So können Steuersignale der Steuereinheit 49 direkt an den Antriebsmotor 57 übermittelt werden, um die Heckprüfrollen entsprechend der jeweiligen nachzustellenden Fahrsituation ansteuern zu können.

An den Heckprüfrollen sind Drehdurchführungen 20, 23 mit Druckluftanschlüssen p_{HAL1} und p_{HAR1} bzw. p_{HAL2} und p_{HAR2} vorgesehen. Die Druckluftanschlüsse sind, wie es aus Figur 2 hervorgeht, über Druckluftleitungen 20a, 23a mit einer Steuereinrichtung 62 zur Druckluftverteilung verbunden, welche wiederum mit einem Drucklufterzeugungsgerät verbunden ist. Über die Steuereinrichtung 62 kann die Zufuhr von Druckluft an den Druckluftanschlüssen 20, 23 definiert eingestellt werden und die Heckprüfrollen somit mit Druckluft beaufschlagt werden. Diese Druckluft kann durch in den Prüfrollen vorgesehene Luftaustrittsöffnungen 26, 38, 39, 40, wie beispielsweise in der Mantelfläche der Prüfrollen vorgesehene Bohrungen, aus den Prüfrollen in einen Bereich zwischen Prüfrolle und Reifen austreten. Die Druckluft kann somit beispielsweise zur Kühlung von Reifen eingesetzt werden.

Die Heckprüfrollen sind drehbar auf Aufnahmeplatten 21, 44 vorgesehen. Dabei weisen die Heckprüfrollen jeweils einer Fahrzeugseite stets den gleichen Abstand zueinander auf der jeweiligen Aufnahmeplatte 21, 44 auf.

Die Aufnahmeplatten 21, 44 sind jeweils um durch Drehlager 30, 29 ausgebildete Z-Achsen drehbar. Mit der Drehbarkeit der Aufnahmeplatten 21, 44 sind somit auch die auf den Aufnahmeplatten 21, 44 gelagerten Heckprüfrollen gegenüber den in den Figuren 1 und 2 dargestellten Positionen verschwenkbar.

An den Drehlagern 30, 29 sind jeweils Messsysteme 52, 53 für die Drehlager 30, 29 der drehbaren Aufnahmeplatten 21, 44 montiert. Wie es aus Figur 2 hervorgeht, sind die Messsysteme 52, 53 über Datenleitungen 52a, 53a mit der Steuereinheit 49 des Prüfstandes 50 verbunden. Die von den Messsystemen 52, 53 ermittelten Messwerte können somit direkt an die Steuereinheit 49 übermittelt werden. Die Messsysteme 52, 53 können hierbei beispielsweise Drehwinkelsensoren umfassen, mit welchen die Drehbewegung der Aufnahmeplatten 21, 44 erfasst werden kann.

Die Drehlager 30, 29 sind jeweils auf Y-Schlitten 43, 42 montiert. Die Y-Schlitten 43, 42 weisen jeweils Linearführungen 13, 14 bzw. 15, 16 auf, entlang welcher die Y-Schlitten 43, 42 und somit auch die an den Y-Schlitten 43, 42 montierten Drehlager 30, 29 in Y-Richtung verschoben werden können. Die Linearführungen 13, 14 bzw. 15, 16 befinden sich dabei in einer Ebene unterhalb der Ebene der Aufnahmeplatten 21, 44, welche daher ungehindert um die Drehlager 30, 29 drehbar sind. Mithilfe der Y-Schlitten 43, 42 ist somit die Position der drehbaren Aufnahmeplatten 21, 44 in Y-Richtung linear verschiebbar.

An wenigstens einer Linearführung 13, 15 der jeweiligen Y-Schlitten 43, 42 ist in der Ausführungsform der Figuren 1 und 2 jeweils ein Messsystem 54, bzw. 55 vorgesehen. Das Messsystem 54, 55 kann beispielsweise einen Wegsensor für den jeweiligen Y-Schlitten 43, 42 umfassen. Die Messsysteme 54, 55 sind, wie es in Figur 2 gezeigt ist, über Datenleitungen 54a, 55a mit der Steuereinheit 49 des Prüfstandes 50 verbunden, sodass an die Steuereinheit 49 die gemessenen Positionsveränderungen der Aufnahmeplatten 41, 44 in Y-Richtung direkt übermittelt werden können.

Die Y-Schlitten 43, 42 sind wiederum auf einem X-Schlitten 12 montiert, welcher Linearführungen 11, 22 aufweist, entlang welcher sich der X-Schlitten in X-Richtung hin und her bewegen kann. Der X-Schlitten 12 befindet sich in einer Ebene unterhalb der Ebene der Y-Schlitten 43, 42. Die Linearführungen 11, 12 des X-Schlittens 12 liegen dabei unterhalb und überkreuz zu den Linearführungen 13, 14 bzw. 15, 16 der Y-Schlitten 43, 42. Für den Antrieb des X-Schlittens 12 in der X-Richtung ist ein Antriebsmotor 17 vorgesehen. Der Antriebsmotor 17 ist über einen Kugelgewindebetrieb 18 mit dem X-Schlitten 12 verbunden.

An dem Antriebsmotor 17 ist ein Absolutmesssystem 51 für den Antriebsmotor 17 des X-Schlittens 12 vorgesehen. Das Absolutmesssystem 51 kann beispielsweise einen Sensor zur Erfassung der Drehbewegung des Antriebsmotors 17 aufweisen. Das Absolutmesssystem 51 ist, wie es in Figur 2 dargestellt ist, über eine Datenleitung 51a mit der Steuereinheit 49 des Prüfstandes 50 verbunden. So können durch das Absolutmesssystem 51 erfasste Messwerte direkt an die Steuereinheit 49 übermittelt werden. Außerdem kann die Steuereinheit 49 über die Datenleitung 51a dem Antriebsmotor 17 Steuerbefehle zur Ausführung einer vorgegebenen Bewegungsfunktion durch den X-Schlitten 12 übermitteln.

Da der Antriebsmotor 17 ein elektrischer Antriebsmotor ist, können die Steuerbefehle der Steuereinheit 49 sofort in eine entsprechende Bewegung des X-Schlittens 12 umgesetzt werden. Dabei können auch abrupte Richtungswechsel der Bewegung des X-Schlittens 12 ausgeführt werden. Es können auch Sprungfunktionen oder dergleichen umgesetzt werden. Ferner können jegliche Arten von Schwingungs- und Schlingerbewegungen des Fahrzeuges durch die Bewegung des X-Schlittens 12 in X-Richtung und die sich automatisch ergebenden Bewegungen der Y-Schlitten 43, 42 in Y-Richtung und der drehbaren Aufnahmeplatten 21, 44 um die Drehachsen 30, 29 umgesetzt werden.

Wie es durch die Pfeile S_{HAL} und S_{HAR} in Figur 1 dargestellt ist, lassen sich die Y-Schlitten 43, 42 in Y-Richtung um bestimmte Strecken hin und her bewegen.

Zur Fixierung der Position des zu prüfenden Fahrzeuges auf dem Prüfstand 50 sind auf den drehbaren Aufnahmeplatten 21, 44 Fixierungsanschläge 41 vorgesehen. Alternativ ist es auch möglich, zur Fahrzeugbefestigung Radführungen auf dem Prüfstand 50 zu montieren, die beispielsweise Anlaufrollen aufweisen können, die seitlich der Fahrzeugräder und/oder vor und nach einzelnen Fahrzeugrädern angeordnet sind.

Wie es ferner aus Figur 2 hervorgeht, ist die Steuereinheit 49 des Prüfstandes 50 über eine Verbindungsleitung 49a mit einer Datenschnittstelle 63 zum Fahrzeug verbunden. Von der Datenstelle 63 erhält die Steuereinheit 49 Aktorkennwerte des Fahrzeuges. Die Steuereinheit 49 ist in der Lage, die durch die unterschiedlichen am Prüfstand 50 vorgesehenen Sensoren erfassten Sensorkennwerte mit den Aktorkennwerten des Fahrzeuges zu synchronisieren, das heißt, die Aktorkennwerte und die Sensorkennwerte des Prüfstandes auf eine einheitliche zeitliche Basis zu stellen.

Auch wenn es in den Darstellungen von Figur 1 und Figur 2 nicht explizit gezeigt ist, können zwischen den einander auf einer Fahrzeugseite gegenüber liegenden Frontprüfrollen und/oder Heckprüfrollen Einspritz- oder Bestrahlungsvorrichtungen vorgesehen sein, mit welchen zwischen die jeweiligen Prüfrollen Druckluft, ein Fluid und/oder ein gefrorenes Fluid, wie beispielsweise Schnee eingebracht werden kann. Auf diese Weise ist es einerseits möglich, die Reifen im Betrieb zu kühlen oder auch bestimmte Fahrsituationen, wie beispielsweise Aquaplaning, nachzubilden.

Es ist ferner möglich, dass in den Frontprüfrollen und/oder den Heckprüfrollen jeweils wenigstens eine Bohrung in einer Mantelfläche der jeweiligen Prüfrolle vorgesehen ist, durch welche beispielsweise ein Fluid oder Druckluft in den Bereich zwischen der jeweiligen Prüfrolle und dem darauf aufstehenden Reifen eingebracht werden kann. Auch auf diese Weise kann eine Kühlung vorgenommen werden und/oder bestimmte Fahrsituationen nachgestellt werden.

Es ist außerdem möglich, in X-Richtung vor den Prüfrollen Einbringvorrichtungen vorzusehen, durch welche beispielsweise ein Kunststoffkörper zwischen die Prüfrollen und den darauf aufstehenden Reifen eingebracht werden kann. Auf diese Weise können beispielsweise unterschiedliche Fahrbahnbeläge simuliert werden.

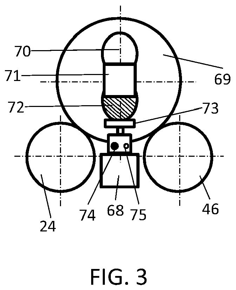

Figur 3 zeigt außerdem eine weitere mögliche Ausgestaltung des erfindungsgemäßen Prüfstandes, wie beispielsweise des Prüfstandes 50 aus den Figuren 1 und 2, in einer schematischen Seitenansicht. Dabei ist zwischen einer zwischen Prüfrollen 24, 46 vorgesehenen Hubschwelle 68 und einer Radaufhängung des zu prüfenden Fahrzeuges ein Druckzylinder 73 vorgesehen. Der Druckzylinder 73 ist mit einer Hydraulikdruck- oder einer Druckluftleitung 74, 75 verbunden. Ferner ist der Druckzylinder 73 über eine Steuerleitung mit der Steuereinheit 49 des Prüfstandes 50 verbunden. Der Druckzylinder 73 kann sich an der Hubschwelle 68 abstützen und damit das Rad, das auf den jeweiligen Prüfrollen 24, 46 aufsteht, entlasten. Die Höhe der jeweiligen Entlastung kann durch die Steuereinheit 49 definiert eingestellt werden und somit während des Prüfens des Fahrzeuges stetig verändert werden. Auf diese Weise können beispielsweise Fahrbahnunebenheiten geeignet nachgestellt werden.

**Bezugszeichen:**

| Kurzzeichen | Beschreibung |
|---|---|
| 1 | Kühldüsenplatte mit Drehdurchführung für die zweite Frontprüfrolle vorn links |
| 1a | Druckluftleitung zur Kühldüsenplatte mit Drehdurchführung für die zweite Frontprüfrolle vorn links |
| 2 | Kühldüsenplatte mit Drehdurchführung für die erste Frontprüfrolle vorn links |
| 2a | Druckluftleitung zur Kühldüsenplatte mit Drehdurchführung für die erste Frontprüfrolle vorn links |
| 3 | erste Frontprüfrolle vorn links |
| 4 | Achswelle vorn |
| 5 | erste Frontprüfrolle vorn rechts |
| 6 | Antriebsmotor Frontrollen |
| 6a | Verbindungsleitung Antriebsmotor Frontprüfrollen |
| 7 | Fahrzeugvorderachse mit Fahrzeugrädern |
| 8 | zweite Frontprüfrolle vorn rechts |
| 9 | Achswelle vorn |
| 10 | zweite Frontprüfrolle vorn links |
| 11 | erste Linearführung für X-Schlitten |
| 12 | X-Schlitten |
| 13 | erste Linearführung für linken Y-Schlitten |
| 14 | zweite Linearführung für linken Y-Schlitten |
| 15 | erste Linearführung für rechten Y-Schlitten |
| 16 | zweite Linearführung für rechten Y-Schlitten |
| 17 | Antriebsmotor X-Schlitten |
| 18 | Kugelgewindetrieb für X-Schlitten |
| 19 | erste Heckprüfrolle vorn links |
| 20 | Drehdurchführung Heckprüfrollen vorn mit Druckanschlüssen p_{HAL1} und p_{HAR1} |
| 20a | Druckluftleitungen zur Drehdurchführung Heckprüfrollen vorn mit Druckanschlüssen p_{HAL1} und p_{HAR1} |
| 21 | drehbare Aufnahmeplatte links |
| 22 | zweite Linearführung für X-Schlitten |
| 23 | Drehdurchführung Heckprüfrollen hinten mit Druckanschlüssen p_{HAL2} und PHAR2 |
| 23a | Druckluftleitungen zur Drehdurchführung Heckprüfrollen hinten mit Druckanschlüssen P_{HAL2} und P_{HAR2} |
| 24 | zweite Heckprüfrolle vorn links |
| 25 | erste Heckprüfrolle vorn rechts |
| 26 | Luftaustrittsöffnung innerhalb der zweiten Heckprüfrolle vorn rechts |
| 27 | zweite Heckprüfrolle vorn rechts |
| 28 | Achswelle Heckprüfrollen hinten |
| 29 | Drehlager der drehbaren Aufnahmeplatte rechts |
| 30 | Drehlager der drehbaren Aufnahmeplatte links |
| 31 | Achswelle Heckprüfrollen vorn |
| 32 | Druckfeder der ersten Heckprüfrolle vorn rechts |
| 33 | Gegenlager Achswelle Heckprüfrollen vorn |
| 34 | Druckfeder der zweiten Heckprüfrolle vorn links |
| 35 | Druckfeder der zweiten Heckprüfrolle hinten links |
| 36 | Gegenlager Achswelle Heckprüfrollen hinten |
| 37 | Druckfeder der ersten Heckprüfrolle hinten rechts eins |
| 38 | Luftaustrittsöffnung innerhalb der zweiten Heckprüfrolle hinten rechts |
| 39 | Luftaustrittsöffnung innerhalb der ersten Heckprüfrolle vorn links |
| 40 | Luftaustrittsöffnung innerhalb der ersten Heckprüfrolle hinten links |
| 41 | Fixierungsanschlag |
| 42 | Y-Schlitten rechts |
| 43 | Y-Schlitten links |
| 44 | drehbare Aufnahmeplatte rechts |
| 45 | erste Heckprüfrolle hinten rechts |
| 46 | zweite Heckprüfrolle hinten links |
| 47 | erste Heckprüfrolle hinten links |
| 48 | zweite Heckprüfrolle hinten rechts |
| 49 | Steuereinheit Prüfstand |
| 49a | Verbindungsleitung Steuereinheit Prüfstand mit Datenschnittstelle zum Fahrzeug |
| 50 | Prüfstand |
| 51 | Absolutmesssystem Antriebsmotor X-Schlitten |
| 51a | Datenleitung Absolutmesssystem Antriebsmotor X-Schlitten |
| 52 | Messsystem für Drehlager der drehbaren Aufnahmeplatte links |
| 52a | Datenleitung Messsystem für Drehlager der drehbaren Aufnahmeplatte links |
| 53 | Messsystem für Drehlager der drehbaren Aufnahmeplatte rechts |
| 53a | Datenleitung Messsystem für Drehlager der drehbaren Aufnahmeplatte rechts |
| 54 | Messsystem Y-Schlitten links |
| 54a | Datenleitung Messsystem Y-Schlitten links |
| 55 | Messsystem Y-Schlitten rechts |
| 55a | Datenleitung Messsystem Y-Schlitten rechts |
| 56 | Messsystem X-Schlitten |
| 56a | Datenleitung Messsystem X-Schlitten |
| 57 | Antriebsmotor Heckprüfrollen |
| 57a | Verbindungsleitung Antriebsmotor Heckprüfrollen |
| 58 | Messsystem Heckprüfrollen vorn links |
| 58a | Datenleitung Messsystem Heckprüfrollen vorn links |
| 59 | Messsystem Heckprüfrollen vorn rechts |
| 59a | Datenleitung Messsystem Heckprüfrollen vorn rechts |
| 60 | Messsystem Heckprüfrollen hinten rechts |
| 60a | Datenleitung Messsystem Heckprüfrollen hinten rechts |
| 61 | Messsystem Heckprüfrollen hinten links |
| 61a | Datenleitung Messsystem Heckprüfrollen hinten links |
| 62 | Steuereinrichtung Druckluftverteilung |
| 62a | Datenleitung Steuereinrichtung Druckluftverteilung |
| 63 | Datenschnittstelle zum Fahrzeug |
| 64 | Messsystem Frontprüfrollen vorn |
| 64a | Datenleitung Messsystem Frontprüfrollen vorn |
| 65 | Messsystem Frontprüfrollen hinten |
| 65a | Datenleitung Messsystem Frontprüfrollen hinten |
| 66 | Messsystem Heckprüfrollen vorn |
| 66a | Datenleitung Messsystem Heckprüfrollen vorn |
| 67 | Messsystem Heckprüfrollen hinten |
| 67a | Datenleitung Messsystem Heckprüfrollen hinten |
| 68 | Hubschwelle |
| 69 | Fahrzeugrad |
| 70 | Achslager oben |
| 71 | Achsschenkel |
| 72 | Lenkerarm (Schnitt) unten |
| 73 | Druckzylinder |
| 74 | Druckanschluss Zulauf |
| 75 | Druckanschluss Rücklauf |

## Patentansprüche

1. Prüfsystem mit einem Prüfstand (50) für ein Fahrzeug, welcher wenigstens eine Prüfrolle (19, 47; 27, 48; 3, 10; 5, 8) je Fahrzeugrad aufweist, wobei
wenigstens einer der Prüfrollen (19, 47; 27, 48; 3, 10; 5, 8) ein Antriebsmotor (6, 57) zugeordnet ist, durch den die wenigstens eine Prüfrolle (19, 47; 27, 48; 3, 10; 5, 8) rotierbar und/oder abbremsbar ist,
an dem Fahrzeug und dem Prüfstand (50) Sensoren vorgesehen sind, mit welchen Sensorkennwerte von Fahrzeug und Prüfstand (50) erfassbar sind, und
der Prüfstand (50) eine Steuereinheit (49) aufweist, an die die Sensorkennwerte übermittelbar sind,
**dadurch gekennzeichnet,**
**dass** der Prüfstand (50) einen X-Schlitten (12) aufweist, für dessen Antrieb ein Antriebsmotor (17) vorgesehen ist, wobei der X-Schlitten (12) in einer quer zur Fahrzeuglängsachse verlaufenden X-Richtung hin und her verschiebbar ist, und auf dem X-Schlitten (12) wenigstens ein mit dem X-Schlitten (12) bewegbarer Y-Schlitten (42; 43) vorgesehen ist, der in einer parallel zur Fahrzeuglängsachse verlaufenden Y-Richtung hin und her verschiebbar ist und an dem eine senkrecht zur X-Richtung und zur Y-Richtung verlaufende, durch ein Drehlager (29, 30) ausgebildete Z-Achse montiert ist, an welcher eine um die Z-Achse drehbare Aufnahmeplatte (21; 44) vorgesehen ist, auf welcher wenigstens eine der Prüfrollen (19, 47; 27, 48) drehbar aufgenommen ist.

2. Prüfsystem nach Anspruch 1, **dadurch gekennzeichnet, dass** der Antriebsmotor (17) des X-Schlittens (12) mit der Steuereinheit (49) des Prüfstandes (50) gekoppelt ist.

3. Prüfsystem nach wenigstens einem der vorhergehenden Ansprüche, **dadurch gekennzeichnet, dass** wenigstens eine der Prüfrollen (19, 47; 27, 48; 3, 10; 5, 8) eine in ihrer Längsausdehnung geteilte Rolle ist, wobei wenigstens ein bewegliches Rollenteil dieser Prüfrolle in der X-Richtung verschiebbar ist.

4. Prüfsystem nach wenigstens einem der vorhergehenden Ansprüche, **dadurch gekennzeichnet, dass** an wenigstens einer der Prüfrollen (19, 47; 27, 48; 3, 10; 5, 8) eine Kühleinrichtung vorgesehen ist.

5. Prüfsystem nach wenigstens einem der vorhergehenden Ansprüche, **dadurch gekennzeichnet, dass** an einer Außenseite wenigstens einer der Prüfrollen (19, 47; 27, 48; 3, 10; 5, 8) eine Kühldüsenvorrichtung (1) mit einer Drehdurchführung für die wenigstens eine Prüfrolle (19, 47; 27, 48; 3, 10; 5, 8) vorgesehen ist, wobei die Kühldüsenvorrichtung (1) über eine Druckluftleitung (1a) mit einem Druckluftanschluss verbunden ist und eine Steuereinrichtung (62) zur Druckluftverteilung vorgesehen ist.

6. Prüfsystem nach wenigstens einem der vorhergehenden Ansprüche, **dadurch gekennzeichnet, dass** zwischen wenigstens einer Hubschwelle (68) und einer Radaufhängung des Fahrzeuges wenigstens ein Druckzylinder (73) vorgesehen ist, der mit einer Hydraulikdruck- oder einer Druckluftleitung und mit der Steuereinheit (49) des Prüfstandes (50) verbunden ist.

7. Prüfsystem nach wenigstens einem der vorhergehenden Ansprüche, **dadurch gekennzeichnet, dass** in einer Mantelfläche wenigstens einer der Prüfrollen (19, 47; 27, 48; 3, 10; 5, 8) wenigstens eine Austrittsöffnung (26, 38, 39, 40) für ein Fluid und/oder Druckluft vorgesehen ist.

8. Prüfsystem nach wenigstens einem der vorhergehenden Ansprüche, **dadurch gekennzeichnet, dass** seitlich wenigstens einer der Prüfrollen (19, 47; 27, 48; 3, 10; 5, 8) eine Strahlvorrichtung vorgesehen ist, mit welcher ein Fluid, Druckluft und/oder ein gefrorenes Fluid zwischen die Prüfrolle (19, 47; 27, 48; 3, 10; 5, 8) und einen auf der Prüfrolle (19, 47; 27, 48; 3, 10; 5, 8) vorgesehenen Reifen des Fahrzeuges strahlbar ist.

9. Prüfsystem nach wenigstens einem der vorhergehenden Ansprüche, **dadurch gekennzeichnet, dass** an dem X-Schlitten (12) und/oder wenigstens an einem der Y-Schlitten (42, 43) wenigstens ein Wegsensor vorgesehen ist und/oder an wenigstens einer Prüfrolle (19, 47; 27, 48; 3, 10; 5, 8) wenigstens ein Drehzahlsensor vorgesehen ist und/oder an wenigstens einer der drehbaren Aufnahmeplatten (21; 44) ein Drehwinkelsensor vorgesehen ist und/oder an wenigstens einem beweglichen Rollenteil einer geteilten Prüfrolle ein Wegsensor und/oder wenigstens ein Infrarotsensor zum Erfassen der Temperatur an wenigstens einen Fahrzeugreifen vorgesehen ist und der jeweilige Sensor mit der Steuereinheit (49) gekoppelt ist.

10. Verfahren zum Prüfen eines Fahrzeuges auf einem Prüfstand (50), wobei jedem Fahrzeugrad (69) des Fahrzeuges wenigstens eine Prüfrolle (19, 47; 27, 48; 3, 10; 5, 8) des Prüfstandes (50) zugeordnet wird und sich das Fahrzeugrad (69) auf der Prüfrolle (19, 47; 27, 48; 3, 10; 5, 8) dreht,
wenigstens eine der Prüfrollen (19, 47; 27, 48; 3, 10; 5, 8) mittels eines Antriebsmotors (6, 57) rotiert und/oder abgebremst wird, und
durch Sensoren des Fahrzeuges und des Prüfstandes (50) Sensorkennwerte des Fahrzeuges und des Prüfstandes (50) erfasst und an eine Steuereinheit (49) des Prüfstandes (50) übermittelt werden,
**dadurch gekennzeichnet,**
**dass** eine Fahrzeugbewegung simuliert wird, indem ein X-Schlitten (12) des Prüfstandes (50) von einem Antriebsmotor (17) angetrieben wird und dadurch in einer quer zur Fahrzeuglängsachse verlaufenden X-Richtung verschoben wird, und auf dem X-Schlitten (12) wenigstens ein Y-Schlitten (42; 43) vorgesehen ist, der sich mit dem X-Schlitten (12) mit bewegt und der in einer parallel zur Fahrzeuglängsachse verlaufenden Y-Richtung verschoben wird und an dem eine senkrecht zur X-Richtung und zur Y-Richtung verlaufende, durch ein Drehlager (29, 30) ausgebildete Z-Achse montiert ist, um die eine Aufnahmeplatte (21; 44) für wenigstens eine der Prüfrollen (19, 47; 27, 48) gedreht wird.

11. Verfahren nach Anspruch 10, **dadurch gekennzeichnet, dass** die Steuereinheit (49) einer Fahrsituation entsprechende Ansteuersignale an die Antriebsmotoren des Prüfstandes (50) übermittelt, Sensorkennwerte des Fahrzeuges und des Prüfstandes (50) von an dem Fahrzeug und an dem Prüfstand (50) vorgesehenen Sensoren empfängt und einen Abgleich der Sensorkennwerte des Fahrzeuges und des Prüfstandes (50) durchführt, wobei den Sensorkennwerten des Fahrzeuges und des Prüfstandes (50) eine einheitliche zeitliche Basis zugeordnet wird.

12. Verfahren nach wenigstens einem der Ansprüche 10 oder 11, **dadurch gekennzeichnet, dass** wenigstens eine der Prüfrollen (19, 47; 27, 48; 3, 10; 5, 8) eine in ihrer Längsausrichtung geteilte Rolle ist, wobei wenigstens ein bewegliches Rollenteil dieser Prüfrolle (19, 47; 27, 48; 3, 10; 5, 8) in der X-Richtung verschoben wird.

13. Verfahren nach wenigstens einem der Ansprüche 10 bis 12, **dadurch gekennzeichnet, dass** zwischen wenigstens eine der Prüfrollen (19, 47; 27, 48; 3, 10; 5, 8) und einen dieser Prüfrolle (19, 47; 27, 48; 3, 10; 5, 8) zugeordneten Reifen des Fahrzeuges wenigstens ein Fluid, Druckluft und/oder ein gefrorenes Fluid eingebracht wird und/oder zwischen wenigstens eine der Prüfrollen (19, 47; 27, 48; 3, 10; 5, 8) und einen dieser Prüfrolle (19, 47; 27, 48; 3, 10; 5, 8) zugeordneten Reifen des Fahrzeuges wenigstens ein Gegenstand eingebracht wird.

14. Verfahren nach wenigstens einem der Ansprüche 10 bis 13, **dadurch gekennzeichnet, dass** mittels wenigstens eines zwischen wenigstens einer Hubschwelle (68) und einer Radaufhängung des Fahrzeuges wechselbar montierten Druckzylinders (73) wenigstens ein Fahrzeugrad (69) des Fahrzeuges entlastet wird.

15. Verfahren nach wenigstens einem der Ansprüche 10 bis 14, **dadurch gekennzeichnet, dass** ein Lenkeinschlag des Fahrzeuges an die Steuereinheit (49) übertragen wird und diese den Antriebsmotor (17) des X-Schlittens (12) ansteuert, um durch Auslenkung des Fahrzeughecks die gewünschte Lenkbewegung der Vorderräder des Fahrzeuges umzusetzen.

## Claims

1. Test system with a test stand (50) for a vehicle, which comprises at least one test roller (19, 47; 27, 48; 3, 10; 5, 8) per vehicle wheel, wherein
a drive motor (6, 57) is assigned to at least one of the test rollers (19, 47; 27, 48; 3, 10; 5, 8), by means of which the at least one test roller (19, 47; 27, 48; 3, 10; 5, 8) is rotatable and/or brakable,
sensors are provided on the vehicle and the test stand (50), with which sensor identification values of vehicle and test stand (50) can be recorded, and the test stand (50) comprises a control unit (49), to which the sensor identification values can be transmitted,
**characterized in that**
the test stand (50) comprises an X slide (12), for whose drive a drive motor (17) is provided, wherein the X slide (12) can be moved back and forth in an X direction running along transversely to the vehicle longitudinal axle and at least one Y slide (42, 43) movable with the X slide (12) is provided on the X slide (12), which can be moved back and forth in a Y direction running along parallel to the vehicle longitudinal axle and on which a Z axle is mounted running along vertical to the X direction and the Y direction, formed by means of a pivot bearing (29, 30), on which a mounting plate (21; 44) rotatable around the Z axle is provided, on which at least one of the test rollers (19, 47; 27, 48) is rotatably mounted.

2. Test system according to claim 1, **characterized in that** the drive motor (17) of the X slide (12) is coupled with the control unit (49) of the test stand (50).

3. Test system according to at least one of the preceding claims, **characterized in that** at least one of the test rollers (19, 47; 27, 48; 3, 10; 5, 8) is a roller that is divided in its longitudinal extension, wherein at least one movable roller part of this test roller is movable in the X direction.

4. Test system according to at least one of the preceding claims, **characterized in that** a cooling device is provided on at least one of the test rollers (19, 47; 27, 48; 3, 10; 5, 8)

5. Test system according to at least one of the preceding claims, **characterized in that** a cooling nozzle device (1) with a rotary joint for the at least one test roller (19, 47; 27, 48; 3, 10; 5, 8) is provided on an outer side of at least one of the test rollers (19, 47; 27, 48; 3, 10; 5, 8), wherein the cooling nozzle device (1) is connected with a compressed air connection via a compressed air line (1a) and a control device (62) for the compressed air distribution is provided.

6. Test system according to at least one of the preceding claims, **characterized in that** at least one pressure cylinder (73) is provided between a lifting sill (68) and a wheel suspension of the vehicle, which is connected to a hydraulic pressure or a compressed air line and to the control unit (49) of the test stand (50).

7. Test system according to at least one of the preceding claims, **characterized in that** at least one discharge opening (26, 38, 39, 40) for a fluid and/or compressed air is provided in a casing surface of at least one of the test rollers (19, 47; 27, 48; 3, 10; 5, 8).

8. Test system according to at least one of the preceding claims, **characterized in that** a jet device is provided laterally of at least one of the test rollers (19, 47; 27, 48; 2, 10; 5, 8), with which a fluid, compressed air and/or a frozen fluid is jettable between the test roller (19, 47; 27, 48; 3, 10; 5, 8) and a tire of the vehicle provided on the test roller (19, 47; 27, 48; 3, 10; 5, 8).

9. Test system according to at least one of the preceding claims, **characterized in that** at least one position sensor is provided on the X slide (12) and/or at least on one of the Y slides (42, 43) and/or at least one speed sensor is provided on at least one test roller (19, 47; 27, 48; 3, 10; 5, 8) and/or a rotation angle sensor is provided on at least one of the rotatable mounting plates (21; 44) and/or a position sensor and/or at least one infrared sensor for recording the temperature on at least one vehicle wheel is provided on at least one movable roller part of a divided test roller and the respective sensor is coupled with the control unit (49).

10. Method for testing a vehicle on a test stand (50), wherein each vehicle wheel (69) of a vehicle is assigned at least one test roller (19, 47; 27, 48; 3, 10; 5, 8) of the test stand (50) and the vehicle wheel (69) rotates on the test roller (19, 47; 27, 48; 3, 10; 5, 8),
at least one of the test rollers (19, 47; 27, 48; 3, 10; 5, 8) is rotated and/or decelerated by means of a drive motor (6, 57), and
sensor identification values of the vehicle and the test stand (50) are recorded by means of sensors of the vehicle and the test stand (50) and are transmitted to a control unit (49) of the test stand (50),
**characterized in that**
a vehicle movement is simulated whereby an X slide (12) of the test stand (50) is driven by means of a drive motor (17) and is thereby moved in an X direction running along transversely to the vehicle longitudinal axle, and at least one Y slide (42; 43) is provided on the X slide (12), which moves along with the X slide (12) and which is moved in a Y direction running along parallel to the vehicle longitudinal axle and on which a Z axle running along vertically to the X direction and the Y direction, formed by means of a pivot bearing (29, 30), around which a mounting plate (21; 44) for at least one of the test rollers (19, 47; 27, 48) is rotated.

11. Method according to claim 10, **characterized in that** the control unit (49) transmits drive signals corresponding to a drive situation to the drive motors of the test stand (50), receives sensor identification values of the vehicle and the test stand (50) by sensors provided on the vehicle and on the test stand (50) and carries out a comparison of the sensor identification values of the vehicle and the test stand (50), wherein the sensor readings of the vehicle and the test stand (50) are assigned a uniform temporal basis.

12. Method according to at least one of the claims 10 or 11, **characterized in that** at least one of the test rollers (19, 47; 27, 48; 3, 10; 5, 8) is a roller divided in its longitudinal extension, wherein at least one movable roller part of this test roller (19, 47; 27, 48; 3, 10; 5, 8) is moved in the X direction.

13. Method according to at least one of the claims 10 to 12, **characterized in that** at least one fluid, compressed air and/or a frozen fluid is inserted between at least one of the test rollers (19, 47; 27, 48; 3, 10; 5, 8) and a wheel of the vehicle assigned to this test roller (19, 47; 27, 48; 3, 10; 5, 8) and/or at least one object is inserted between at least one of the test rollers (19, 47; 27, 48; 2, 10; 5, 8) and a wheel of the vehicle assigned to this test roller (19, 47; 27, 48; 3, 10; 5, 8).

14. Method according to at least one of the claims 10 to 13 **characterized in that** at least one vehicle wheel (69) of the vehicle is relieved by means of at least one pressure cylinder (73) exchangeably mounted between at least one lifting threshold (68) and a wheel suspension of the vehicle.

15. Method according to at least one of the claims 10 to 14, **characterized in that** a steering angle of the vehicle is transmitted to the control unit (49) and it controls the drive motor (17) of the X slide (12), in order to implement the desired steering movement of the front wheels of the vehicle by means of deflection of the vehicle rear.

## Revendications

1. Système de contrôle avec un banc d'essai (50) pour un véhicule, qui comporte au moins un rouleau d'essai (19, 47; 27, 48; 3, 10; 5, 8) par roue de véhicule,
un moteur d'entraînement (6, 57) étant attribué à au moins l'un des rouleaux d'essai (19, 47; 27, 48; 3, 10; 5, 8), au moyen duquel l'au moins un rouleau d'essai (19, 47; 27, 48; 3, 10; 5, 8) peut être tourné et / ou freiné,
des capteurs étant prévus au véhicule et au banc d'essai (50), avec lesquels des valeurs caractéristiques de capteur peuvent être détectées du véhicule et du banc d'essai (50), et
le banc d'essai (50) présentant une unité de commande (49), à laquelle les valeurs caractéristiques de capteur peuvent être transmises,
**caractérisé en ce que**
le banc d'essai (50) comporte un chariot X (12), par l'entraînement duquel un moteur d'entraînement (17) est prévu, le chariot X (12) pouvant être déplacé avant arrière dans une direction X s'étendant transversalement à l'axe longitudinal du véhicule, et sur le chariot X (12) au moins un chariot Y (42; 43) mobile avec le chariot X (12) est prévu, qui peut être déplacé avant arrière dans une direction Y s'étendant parallèlement à l'axe longitudinal du véhicule et sur lequel un axe Z est monté, qui est formé par un palier rotatif (29, 30) et qui s'étend perpendiculairement par rapport à la direction X et à la direction Y, sur lequel une plaque de réception (21; 44) pouvant tourner autour de l'axe Z est prévu, sur lequel au moins l'un des rouleaux d'essai (19, 47; 27, 48) est reçu pouvant tourner.

2. Système de contrôle selon la revendication 1, **caractérisé en ce que** le moteur d'entraînement (17) du chariot X (12) est couplé à l'unité de commande (49) du banc d'essai (50).

3. Système de contrôle selon au moins l'une des revendications précédentes, **caractérisé en ce que** au moins l'un des rouleaux d'essai (19, 47; 27, 48; 3, 10; 5, 8) est un rouleau divisé dans son étendue longitudinale, au moins une partie de rouleau mobile de ce rouleau d'essai étant déplaçable dans la direction X.

4. Système de contrôle selon au moins l'une des revendications précédentes, **caractérisé en ce que** un dispositif de refroidissement est prévu sur au moins l'un des rouleaux d'essai (19, 47; 27, 48; 3, 10; 5, 8).

5. Système de contrôle selon au moins l'une des revendications précédentes, **caractérisé en ce que** à une côté extérieur d'au moins l'un des rouleaux d'essai (19, 47; 27, 48; 3, 10; 5, 8) un dispositif de buse de refroidissement (1) avec un passage rotatif pour ledit au moins un rouleau d'essai (19, 47; 27, 48; 3, 10; 5, 8) est prévu, le dispositif de buse de refroidissement (1) étant connecté à une connexion d'air comprimé via une conduite d'air comprimé (1a) et un dispositif de commande (62) étant prévu pour distribuer l'air comprimé.

6. Système de contrôle selon au moins l'une des revendications précédentes, **caractérisé en ce que** au moins un cylindre de pression (73) est prévu entre au moins un seuil de levage (68) et une suspension de roue de véhicule, qui est connecté à une conduite de pression hydraulique ou d'air comprimé et à l'unité de commande (49) du banc d'essai (50).

7. Système de contrôle selon au moins l'une des revendications précédentes, **caractérisé en ce que** dans une surface extérieure d'au moins l'un des rouleaux d'essai (19, 47; 27, 48; 3, 10; 5, 8) au moins une ouverture de sortie (26, 38, 39, 40) pour un fluide et / ou pour de l'air comprimé est prévue.

8. Système de contrôle selon au moins l'une des revendications précédentes, **caractérisé en ce que** latéralement d'au moins l'un des rouleaux d'essai (19, 47; 27, 48; 3, 10; 5, 8) un dispositif à jet est prévu, avec lequel un fluide, de l'air comprimé et / ou un fluide gelé peut être projeté entre le rouleau d'essai (19, 47; 27, 48; 3, 10; 5, 8) et un pneu du véhicule prévu sur le rouleau d'essai (19, 47; 27, 48; 3, 10; 5, 8).

9. Système de contrôle selon au moins l'une des revendications précédentes, **caractérisé en ce que** au moins un capteur de déplacement est prévu sur le chariot X (12) et / ou sur au moins l'un des chariots Y (42, 43), et / ou sur au moins un rouleau d'essai (19, 47; 27, 48; 3, 10; 5, 8) au moins un capteur de vitesse est prévu et/ou sur au moins l'une des plaques de réception rotatives (21; 44) un capteur de l'angle de rotation est prévu et/ou sur au moins une partie de rouleau mobile d'un rouleau d'essai divisé un capteur de déplacement et / ou au moins un capteur infrarouge pour détecter la température sur au moins un pneu de véhicule est prévu, et le capteur respectif est couplé à l'unité de commande (49).

10. Procédé pour contrôler un véhicule sur un banc d'essai (50),
au moins un rouleau d'essai (19, 47; 27, 48; 3, 10; 5, 8) du banc d'essai (50) étant attribué à chaque roue de véhicule (69) du véhicule et la roue de véhicule (69) se tournant sur le rouleau d'essai (19, 47; 27, 48; 3.10; 5, 8),
au moins l'un des rouleaux d'essai (19, 47; 27, 48; 3, 10; 5, 8) étant mis en rotation et / ou freiné par un moteur d'entraînement (6, 57), et
des valeurs caractéristiques de capteur du véhicule et du banc d'essai (50) détectés par des capteurs du véhicule et du banc d'essai (50) étant transmis à une unité de commande (49) du banc d'essai (50),
**caractérisé en ce que**
un mouvement de véhicule est simulé, un chariot X (12) du banc d'essai (50) étant entraîné par un moteur d'entraînement (17) et ainsi déplacé dans une direction X s'étendant transversalement à l'axe longitudinal du véhicule, et sur le chariot X (12) au moins un chariot Y (42; 43) étant prévu, qui se meut avec le chariot X (12) et qui est déplacé dans une direction Y s'étendant parallèlement à l'axe longitudinal du véhicule et sur lequel un axe Z est monté, qui est formé par un palier rotatif (29, 30) et qui s'étend perpendiculairement par rapport à la direction X et à la direction Y, autour duquel une plaque de réception (21; 44) pour au moins l'un des rouleaux d'essai (19, 47; 27, 48) est tournée.

11. Procédé selon la revendication 10, **caractérisé en ce que** l'unité de commande (49) transmet des signaux de commande correspondants à une situation de conduite aux moteurs d'entraînement du banc d'essai (50), reçoit des valeurs caractéristiques de capteur du véhicule et du banc d'essai (50) depuis des capteurs prévus sur le véhicule et sur le banc d'essai (50), et compare les valeurs caractéristiques de capteur du véhicule et du banc d'essai (50), une base de temps uniforme étant attribuée aux valeurs caractéristiques de capteur du véhicule et du banc d'essai (50).

12. Procédé selon au moins l'une des revendications 10 ou 11, **caractérisé en ce que** au moins l'un des rouleaux d'essai (19, 47; 27, 48; 3, 10; 5, 8) est un rouleau divisé dans son orientation longitudinale, au moins une partie de rouleau mobile de ce rouleau d'essai (19, 47; 27, 48; 3, 10; 5, 8) étant déplacé dans la direction X.

13. Procédé selon au moins l'une des revendications 10 à 12, **caractérisé en ce que** au moins un fluide, de l'air comprimé et/ou un fluide gelé est introduit entre au moins l'un des rouleaux d'essai (19, 47; 27, 48; 3, 10; 5, 8) et le pneu de véhicule attribué à ce rouleau d'essai (19, 47; 27, 48; 3, 10; 5, 8), et/ou au moins un objet est introduit entre au moins l'un des rouleaux d'essai (19, 47; 27, 48; 3, 10; 5, 8) et le pneu de véhicule attribué à ce rouleau d'essai (19, 47; 27, 48; 3, 10; 5, 8).

14. Procédé selon au moins l'une des revendications 10 à 13, **caractérisé en ce que** au moins une roue de véhicule (69) du véhicule est soulagée au moyen d'au moins un cylindre de pression (73) monté de manière interchangeable entre au moins un seuil de levage (68) et une suspension de roue de véhicule.

15. Procédé selon au moins l'une des revendications 10 à 14, **caractérisé en ce que** un braquage du véhicule est transmis à l'unité de commande (49) et ceci commande le moteur d'entraînement (17) du chariot X (12) afin d'obtenir le mouvement de direction souhaité des roues avant du véhicule en déviant l'arrière du véhicule.
